# EUROPÄISCHE PATENTANMELDUNG

(11) **EP 0 962 689 A1**
(43) Veröffentlichungstag der Anmeldung: **08.12.1999**
(21) Anmeldenummer: 99109393.1
(22) Anmeldetag: 02.06.1999
(51) Int. Cl.: F16L 55/162

(54) **Vorrichtung und Verfahren zur Reparatur von Rohren**

(30) Priorität: 03.06.1998 DE 19824773
(71) Anmelder: Gatys, Darius Peter, 71563 Affalterbach (DE)
(72) Erfinder: Gatys, Darius Peter, 71563 Affalterbach (DE)
(74) Vertreter: Schlimme, Wolfram, Dr.-Ing.

(57) **Zusammenfassung**

Eine Vorrichtung (1) zur Reparatur von Rohren (20), deren Wandung (22) bereichsweise beschädigt oder zerstört ist, umfaßt einen rohrförmigen Basiskörper (2), mit dem Basiskörper (2) verbundene und in Radialrichtung hervorstehende Führungsmittel (8), um die Vorrichtung (1) in einem Rohr (20) zu führen und an der Wandung (22) des Rohrs (20) abzustützen, und zumindest einen am Außenumfang des Basiskörpers (2) vorgesehenen Druckkörper (5), der zwischen einem im wesentlichen drucklosen und am Basiskörper (2) anliegenden Ruhezustand und einem druckbeaufschlagten Expansionszustand, in dem der Druckkörper (5) in Radialrichtung ausgedehnt ist, verfahrbar ist. Der Druckkörper (5) weist eine radial äußere, vom Basiskörper (2) abgewandte Außenwandung (14) auf und ist im Bereich der Außenwandung (14) von einer im wesentlichen rohrförmigen, radial ausdehnbaren Stützhülle (18) umgeben, die starrer und steifer ist als die Außenwandung (14) und die sowohl im Ruhezustand als auch im Expansionszustand den Umfang des Druckkörpers (5) umgibt.

## Beschreibung

Die Erfindung betrifft eine Vorrichtung und ein Verfahren zur Reparatur von Rohren, deren Wandung bereichsweise beschädigt oder zerstört ist.

Es ist bekannt, unterirdische Rohrleitungen, die eine beschädigte Rohrwandung aufweisen, beispielsweise einen Riß oder ein Loch in der Rohrwandung besitzen, mittels eines Kurzliners (z.B. ein mit Kunstharz getränktes Laminat) unter Zuhilfenahme eines radial ausdehnbaren Werkzeugs, eines sogenannten Packers, zu reparieren. Dabei wird auf die radial ausdehnbare, elastische Außenhülle des Druckkörpers des Packers eine Folie aufgebracht, die an ihrer radial äußeren Seite mit einem Kunstharzlaminat versehen ist. Der so ausgerüstete Packer wird dann in der Rohrleitung zu der beschädigten Stelle verfahren, wo durch radiale Ausdehnung der ballonartigen Außenhülle des Packers die mit dem Laminat versehene Folie von innen gegen die beschädigte Rohrwandung gedrückt wird und dort die beschädigte Stelle abdichtet. Besteht die Beschädigung der Rohrwandung aus einem größeren Loch, so kommt es vor, daß der elastische, ballonartige Druckkörper des Packers die mit dem Laminat beschichtete Folie soweit in das Loch hineindrückt, daß an der reparierten Stelle eine nach außen gerichtete Beule in der Rohrwandung auftritt. Die Rohrwandung ist dann zwar wieder abgedichtet, doch ist durch die nach außen gerichtete Beule in der Rohrwandung eine Ausnehmung entstanden, die sich auf das Strömungsverhalten des Fluids im Rohr negativ auswirken kann.

Ein anderer Nachteil bei den herkömmlichen Reparaturverfahren tritt dann auf, wenn an der beschädigten Stelle eine scharfe Kante oder Spitze der Rohrwandung, beispielsweise ein Armiereisen, radial einwärts hervorsteht. Dieser scharfe oder spitze Fremdkörper kann dann beim Expandieren des Packers sowohl die mit dem Kunstharzlaminat beschichtete Folie als auch die Wandung der elastischen, ballonartigen Außenhülle des Packers durchstoßen. In diesem Fall ist dann nicht nur die Reparatur nicht erfolgreich, sondern der Packer wird darüberhinaus beschädigt und muß selbst repariert werden.

Es ist daher die Aufgabe der vorliegenden Erfindung, eine gattungsgemäße Vorrichtung und ein Verfahren zur Reparatur von Rohren, deren Wandung bereichsweise beschädigt oder zerstört ist, zu schaffen, die eine bessere und zuverlässigere Reparatur des Rohrs erlauben.

Die die Vorrichtung betreffende Aufgabe wird gemäß Anspruch 1 gelöst, durch eine Vorrichtung zur Reparatur von Rohren, deren Wandung bereichsweise beschädigt oder zerstört ist, mit einem rohrförmigen Basiskörper, mit dem Basiskörper verbundenen und in Radialrichtung hervorstehenden Führungsmitteln, um die Vorrichtung in einem Rohr zu führen und an der Wandung des Rohrs abzustützen, und mit zumindest einem am Außenumfang des Basiskörpers vorgesehenen Druckkörper, der zwischen einem im wesentlichen drucklosen und am Basiskörper anliegenden Ruhezustand und einem druckbeaufschlagten Expansionszustand, in dem der Druckkörper in Radialrichtung ausgedehnt ist, verfahrbar ist, wobei der Druckkörper eine radial äußere, vom Basiskörper abgewandte Außenwandung aufweist und im Bereich der Außenwandung von einer im wesentlichen rohrförmigen, radial ausdehnbaren Stützhülle umgeben ist, die starrer und steifer ist als die Außenwandung und die sowohl im Ruhezustand als auch im Expansionszustand den Umfang des Druckkörpers umgibt.

Die beim Erfindungsgegenstand zusätzlich vorgesehene starre und steife Stützhülle schützt nicht nur die Außenwandung des Druckkörpers des Packers, sondern verteilt zudem den vom Druckkörper aufgebrachten Druck gleichmäßiger auf die außen auf der Stützhülle aufgebrachte Folie mit dem Kunstharzlaminat, sodaß lokale Druckspitzen, die im Bereich eines Lochs in der Rohrwandung zur Beulenbildung führen, vermieden sind.

Vorzugsweise ist die Stützhülle aus einem um den Umfang des Druckkörpers gewickelten Blech gebildet, das mittels radial einwärts federnd wirkender elastischer Elemente in Anlage an die Außenwandung des Druckkörpers vorgespannt ist. Diese elastischen Elemente sorgen dafür, daß beim Radial-Einwärtsfahren des Druckkörpers nach erfolgter Reparatur auch die Stützhülle in Anlage an der Außenwandung des Druckkörpers bleibt und sich gemeinsam mit der Außenwandung des Druckkörpers radial einwärts bewegt.

Vorzugsweise sind die elastischen Elemente durch Gummiringe gebildet, die außen um die Stützhülle gespannt sind. Besonders vorteilhaft ist es auch, wenn sich die Stützhülle in Axialrichtung über die im wesentlichen gesamte axiale Länge des Druckkörpers erstreckt. Hierdurch wird der Druckkörper von der Stützhülle auf seiner gesamten Länge vor Beschädigung geschützt.

Sind die axialen Stirnkanten der Stützhülle zumindest bereichsweise radial einwärts gerichtet, so wird auf einfache Weise die Stützhülle in Axialrichtung auf dem Druckkörper fixiert, wodurch die radial einwärts gerichteten Stirnkanten auch bei der Radialbewegung des Druckkörpers und der Stützhülle eine sichere Führung der Stützhülle auf dem Druckkörper gewährleisten. Darüber hinaus wird auch der stirnseitige Randbereich des Druckkörpers durch die radial einwärts gerichteten axialen Stirnkanten geschützt, insbesondere wenn diese über den gesamten Umfang radial einwärts gerichtet sind.

In einer weiteren bevorzugten Ausführungsform sind die äußere, vom Basiskörper abgewandte Außenwandung und eine radial innere dem Basiskörper zugewandte Innenwandung über seitliche Faltenwandungen miteinander verbunden. Diese Ausgestaltung des Druckkörpers erlaubt eine noch gleichmäßigere Druckverteilung in Radialrichtung über die gesamte axiale Länge des Druckkörpers. Ein derart ausgestalteter Druckkörper ist beispielsweise in der nicht vorveröffentlichten deutschen Patentanmeldung 198 04 619.7 im Zusammenhang mit einer Vorrichtung zur Rückverformung von Rohren beschrieben.

Weitere vorteilhafte Ausgestaltungen der erfindungsgemäßen Vorrichtung sind in den Ansprüchen 7 bis 18 beschrieben, wobei insbesondere die Ausbildung der Wandungen des Druckkörpers mit einem dehnbaren hochfesten Material aus Kohlefasergewebe oder Kohlefasergeflecht eine hohe Festigkeit und Stabilität des Druckkörpers gewährleistet.

Der das Verfahren betreffende Teil der Erfindung wird gemäß Anspruch 19 gelöst durch ein Verfahren zur Reparatur von Rohren, deren Wandung bereichsweise beschädigt oder zerstört ist, mit einer Vorrichtung gemäß einem der vorhergehenden Ansprüche, mit den Schritten: Bereitstellen eines Packers, Aufbringen einer Trennschicht auf den Außenumfang des Packers, Aufbringen eines aushärtbaren Kunstharzlaminats auf die Trennschicht auf deren vom Außenumfang des Packers abgewandter Seite, Einführen des derart vorbereiteten Packers in ein zu reparierendes Rohr, Verfahren der Vorrichtung im Rohr bis zu einem beschädigten oder zerstörten Rohrabschnitt, derart, daß sich der Packer in Radialrichtung neben dem beschädigten oder zerstörten Rohrabschnitt befindet, Einleiten eines Druckfluids in den Druckkörper, so daß sich der Druckkörper radial ausdehnt und die mit dem Kustharzlaminat versehene Trennschicht radial auswärts gegen den beschädigten oder zerstörten Rohrabschnitt drückt, zumindest teilweises Aushärten des Kunstharzlaminats, Zurückfahren des Druckkörpers in radial einwärts gerichteter Richtung und Entfernen des Packers aus dem zu reparierenden Rohr, wobei die Trennschicht von einer Trägerfolie und/oder einem Trennmittel gebildet ist, wobei vor dem Schritt des Aufbringens der Trägerschicht eine Stützhülle auf den Druckkörper, diesen umfangsmäßig umgebend, aufgebracht wird, die starrer und steifer ist, als die Außenwandung und die sowohl im Ruhezustand als auch im Expansionszustand den Umfang des Druckkörpers umgibt und wobei die Trennschicht auf den Außenumfang der Stützhülle aufgebracht wird.

Dieses Verfahren ermöglicht es, besonders kostengünstig und wirksam die Reparatur eines in seiner Wandung beschädigten Rohrs vorzunehmen, ohne daß dabei eine Beschädigungsgefahr für den Druckkörper besteht und ohne daß es zu einer Bildung von größeren Unstetigkeiten in der Wandung des reparierten Rohrs kommt.

Die Erfindung wird nachfolgend anhand eines Beispiels unter Bezugnahme auf die Zeichnung näher erläutert; in dieser zeigt:
- **Fig. 1.**: eine teilweise geschnittene Seitenansicht einer erfindungsgemäßen Vorrichtung,
- **Fig. 2.**: eine Stirnansicht der Vorrichtung nach Fig. 1
- **Fig. 3.**: eine teilweise geschnittene Seitenansicht einer in einem zu reparierenden Rohrabschnitt befindlichen erfindungsgemäßen Vorrichtung;
- **Fig. 4.**: einen Vertikalschnitt in Längsrichtung durch ein erfindungsgemäß repariertes Rohr;
- **Fig. 5.**: eine alternative Ausführungsform der erfindungsgemäßen Vorrichtung;
- **Fig. 6.**: eine Stirnansicht der alternativen Ausführungsform gemäß Fig. 5 und
- **Fig. 7.**: eine Weiterbildung der Ausführungsform gemäß Fig. 5 und 6.

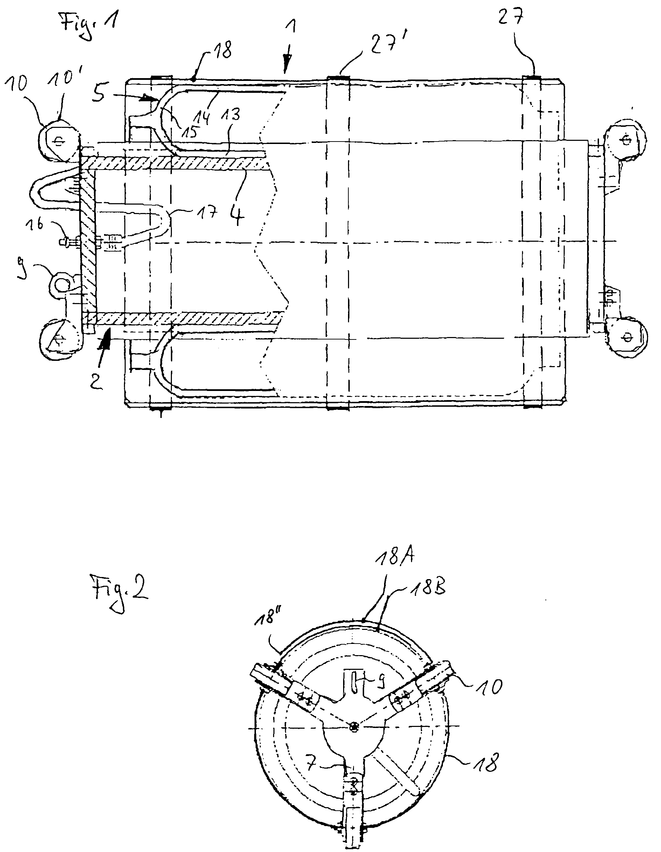

In Fig. 1 ist eine erfindungsgemäße Vorrichtung 1 zur Reparatur von Rohren in ihrem ausgedehnten Zustand gezeigt.

Die Vorrichtung 1 weist einen rohrförmigen Basiskörper 2 auf, der einen zylindrischen Mantel 4 umfaßt, welcher an seinen axialen Enden jeweils mit einem sich in Radialrichtung erstreckenden sternförmigen Stützgerüst 6 versehen ist. Das Stützgerüst 6 dient einerseits zur radialen Versteifung des Mantels 4 und andererseits zur Halterung von Führungsmitteln 8, die im in Fig. 1 gezeigten Beispiel durch Rollen 10 gebildet sind, welche an Lagerböcken 12 drehbar gelagert sind, wobei die Lagerböcke 12 mit den jeweiligen Speichen 7 des sternförmigen Stützgerüsts 6 verbunden sind. Die Rollen 10 sind jeweils so angeordnet, daß die Rollenachse 11 rechtwinklig auf einer gedachten Radialebene stehen.

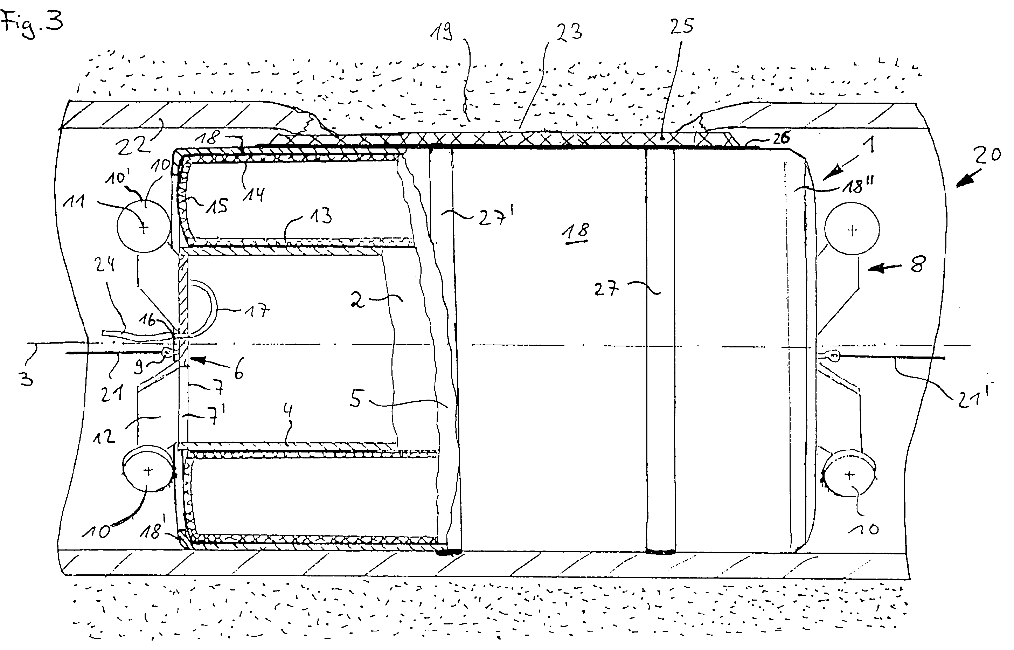

An jedem Axialende der Vorrichtung 1 sind drei Führungsmittel 8 vorgesehen, die jeweils in einem Winkel von 120° über den Umfang der Vorrichtung 1 zueinander versetzt angeordnet sind. Die gedachten Radialebenen der drei Führungsmittel schneiden sich somit in der Mittelachse 3 der Vorrichtung 1. Die radiale Erstreckung der einzelnen Führungsmittel 8 ist derart gewählt, daß der radial äußerste Punkt 10' der jeweiligen Rollen 10 in seiner Radialerstreckung über den Außenumfang eines auf den Mantel 4 des Stützkörpers 2 aufgebrachten, erfindungsgemäß ausgerüsteten Druckkörpers 5 ausreichend hervorsteht, wenn dieser nicht radial ausgedehnt ist (Fig. 2).

Der Druckkörper 5 besitzt eine im wesentlichen ringzylindrische Gestalt und weist eine im wesentlichen zylindrische, radial innere, dem Basiskörper 2 zugewandte Innenwandung 13, eine im wesentlichen zylindrische, radial äußere, vom Basiskörper 2 abgewandte Außenwandung 14 sowie an jedem axialen Ende eine die Innenwandung 13 mit der Außenwandung 14 abdichtend verbindende Wandung 15 auf.

Obwohl die in Fig. 1 gezeigte Vorrichtung zylindrisch ausgebildet ist, kann sie jede beliebige in sich geschlossene Querschnittskontur annehmen, wobei die Querschnittskontur der Vorrichtung 1 an die Querschnittskontur des zu reparierenden Rohrs angepaßt ist.

In Fig. 1 ist weiterhin zu erkennen, daß an jeder Stirnseite der Vorrichtung 1, der Mittelachse 3 benachbart, eine Zugöse 9 am sternförmigen Stützgerüst 6 angebracht ist. Die Zugöse 9 dient zum Anbringen von Zugseilen 21, 21' zum Verfahren der Vorrichtung 1 in einer Rohrleitung 20, wie weiter unter beschrieben ist. Weiterhin sind in Fig. 1 ein Druckanschluß 16 sowie eine Druckleitung 17 zu erkennen, wobei der Druckanschluß 16 am sternförmigen Stützgerüst angebracht ist und die Druckleitung 17 vom Druckanschluß 16 zu einem nicht gezeigten Druckeinlaß des Druckkörpers 5 führt.

In Fig. 2 ist die erfindungsgemäße Vorrichtung in der Stirnansicht in ihrem nicht radial ausgedehnten Zustand gezeigt. Dabei ist deutlich zu erkennen, wie die freien Umfangsenden 18A, 18B der Stützhülle 18 einander so weit überlappen, daß eine geringfügige Überlappung auch im radial ausgedehnten Zustand (Fig. 1) noch vorhanden ist.

Durch die rohrförmige Ausgestaltung des Mantels 4 und die sternförmige Ausgestaltung des Stützgerüstes 6 in Form von Speichen 7 wird in Axialrichtung der Vorrichtung 1 eine Durchflußmöglichkeit für in der zu sanierenden Rohrleitung enthaltenes Fluid geschaffen, so daß ein Entleeren der Rohrleitung nicht erforderlich ist. Beim Verfahren der Vorrichtung 1 in der Rohrleitung tritt das Fluid an einer Axialseite durch die Öffnungen 7' im sternförmigen Stützgerüst 6 in den Innenraum des Stützkörpers 2 ein, durchströmt den Mantel 4 und tritt an der anderen Axialseite durch dort ebenfalls vorgesehene Öffnungen 7' wieder aus.

Fig. 3 zeigt den Einsatz der erfindungsgemäßen Vorrichtung beim Reparieren eines Lochs in der Wandung einer Rohrleitung 20. Die Vorrichtung 1 wurde dazu zunächst auf dem Außenumfang einer den Druckkörper 5 umgebenden Stützhülle 18 entweder abschnittsweise oder auf dem gesamten Umfang mit einer Trennschicht 26 (einer Folie und/oder einer Trennmittelschicht zum Beispiel aus Vaseline oder einem anderen bekannten Trennmittel) versehen, auf die anschließend außen ein Kunstharzlaminat 25 aufgebracht worden ist. In Fig. 3 ist der Fall gezeigt, bei dem die Folie mit dem Kunstharzlaminat nur bereichsweise aufgebracht ist und auf diese Weise eine Art "Pflaster" zur Abdichtung eines Lochs in der Rohrwandung bildet. Anschließend wird die Vorrichtung im Ruhezustand, das heißt mit nicht aufgeblasenem Druckkörper 5, mittels an beiden axialen Stirnseiten der Vorrichtung 1 an den Zugösen 9 angebrachten Zugseilen 21, 21' an jenen Ort der im wesentlichen gerade verlaufenden Rohrleitung 20 verfahren, an dem die Wandung 22 der Rohrleitung 20 zerstört ist, wie bei 23 zu sehen ist. Die Positionierung der Vorrichtung 1 wird dabei mit nicht gezeigten Kanalinspektionskameras überwacht.

Über einen nach außen geführten Druckschlauch 24 wird Druckluft durch den Druckanschluß 16 und die Druckleitung 17 in den Druckkörper 5 eingeleitet, so daß sich dieser radial ausdehnt. Der Druckkörper 5 ist von der Stützhülle 18 umgeben, die starrer und steifer ist als die Außenwandung 14 und die vorzugsweise aus Metall besteht und spiralmantelförmig um den Druckkörper gelegt ist, sodaß sie sich radial ausdehnen kann.

Außen auf der Stützhülle sind, diese umfangsmäßig umgreifend, elastische Gummiringe 27, 27' angebracht, die die Stützhülle 18 bereits im Ruhezustand radial zusammenziehen und in Anlage an die Außenwandung 14 des Druckkörpers 5 halten. Des weiteren erstreckt sich die Stützhülle 18 in Längsrichtung der Vorrichtung geringfügig über den Druckkörper 5 hinaus und umgreift diesen an dessen Stirnkanten im Bereich des Übergangs von der Außenwandung 14 in die stirnseitige Wandung 15 derart, daß die übergreifenden Enden 18A, 18B der Stützhülle 18 diese auf dem Druckkörper 5 in Axialrichtung fixieren und die radial äußere stirnseitige Kante der Stützhülle 18 schützen.

Beim Aufblasen des Druckkörpers 5 geraten jene Rollen 10, die ursprünglich die Vorrichtung 1 auf der Innenseite der Rohrwandung 22 abgestützt hatten, außer Eingriff mit der Rohrwandung und gleichzeitig gerät die Stützhülle 18 mit der Rohrwandung in Eingriff. Die Ausdehnung des Druckkörpers 5 erfolgt im wesentlichen widerstandsfrei bis zu dem Zeitpunkt, an dem die Stützhülle 18 mit dem aufgelegten Reparaturpflaster die Rohrwandung 22 berührt. Dieser Zustand ist in Fig. 3 dargestellt.

Ein weiteres Aufblasen des Druckkörpers 5 führt dazu, daß das Kunstharzlaminat 25 gegen die Wandung 22 des Rohrs im Bereich der beschädigten Stelle 23 gedrückt wird, wobei das Kunstharzlaminat in das Loch geringfügig eindringt. Dabei wird das vorher in das Loch der Rohrwandung eingedrungene Erdreich 19 geringfügig verdrängt oder verdichtet, ohne daß jedoch eine nach außen gerichtete Beule entsteht.

Die Stützhülle 18, die an ihrer Außenseite mit der mit dem Kustharzlaminat 25 beschichteten Folie 26 versehen ist, wie in Fig. 3 nur schematisch dargestellt ist, wird von der Vorrichtung 1 so lange radial nach außen gedrückt, bis das Laminat 25 zumindest teilweise ausgehärtet ist. Dann wird der Druck aus dem Druckkörper 5 abgelassen, wobei die Luft durch den Druckschlauch entleert wird, sodaß der Druckkörper schließlich wieder den Ruhezustand einnimmt. Dabei wird die Stützhülle 18 mittels der Gummiringe 27, 27' in Anlage an die Außenwandung 14 des Druckkörpers gehalten, sodaß auch die Stützhülle 18 beim Ablassen des Drucks aus dem Druckkörper 5 wieder in den Ruhezustand mit geringerem Durchmesser zurückkehrt.

Nach dem Herausziehen der Vorrichtung 1 aus der Rohrleitung 20 besitzt das Rohr an der reparierten Stelle wieder nahezu den ursprünglichen freien Querschnitt, wobei an der reparierten Stelle eine Sandwichkonstruktion aus (von innen nach außen) der Folie und dem Kunstharzlaminat aus mit Harz getränkten Fasermatten entstanden ist. Diese Sandwichbauweise bewirkt, daß das Rohr wieder dicht ist und daß die statische Belastbarkeit des reparierten Rohres wieder hergestellt ist.

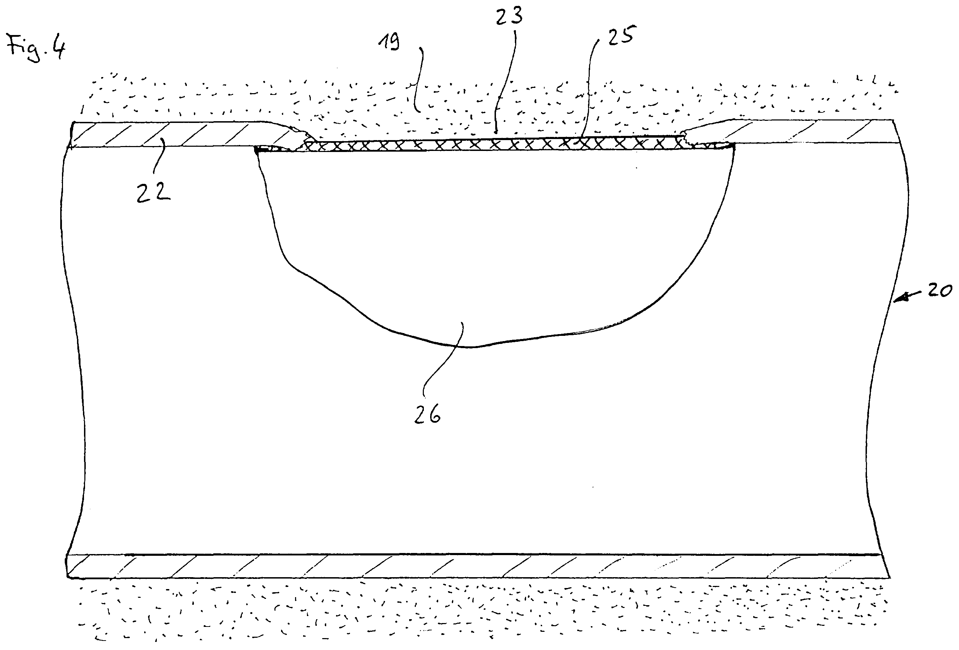

In Fig. 4 ist ein auf diese Weise saniertes Rohr gezeigt, bei dem das Loch 23 von einem aus einer Folie als Trennschicht 26 und dem Kunstharzlaminat 25 bestehenden Reparaturpflaster abgedichtet und verschlossen wurde. Dabei ist zu erkennen, daß das Rohr im reparierten Bereich im wesentlichen den gleichen Querschnitt aufweist wie im unbeschädigten Bereich und daß keine Ausbeulung nach außen aufgetreten ist, wie dies bei einer Reparatur nach dem Stand der Technik der Fall gewesen wäre.

In Fig. 5 ist eine Ausführungsform ähnlich der in Fig. 1 gezeigt, bei der der Basiskörper 2 im Bereich seines jeden axialen Endes mit zumindest einem radial nach außen hervorstehenden Führungsbolzen 28 versehen ist, dessen freies Ende jeweils in einer zugehörigen Öffnung der Stützhülle 18 befestigt ist. Der Führungsbolzen 28 ist im Basiskörper 2 derart gelagert, daß er in Radialrichtung ein- und ausfahrbar ist, so daß der Führungsbolzen 28 die durch die radiale Ausdehnung der Stützhülle 18 bewirkte Radialbewegung mitmachen kann. An seiner radial inneren Seite ist der Führungsbolzen 28 mit einem Kopf 28' versehen, der einen Endanschalg für die radial nach außen gerichtete Bewegung bildet, so daß die maximale radiale Ausdehnung der Stützhülle 18 durch diesen Anschlag festgelegt ist.

Die Führungsbolzen 28 an den Enden des Basiskörpers 2 dienen somit der axialen Fixierung und der radialen Führung der Stützhülle 18 und bilden gleichzeitig eine Sicherungs- und Begrenzungsvorrichtung für die radiale Ausdehnung der Stützhülle 18.

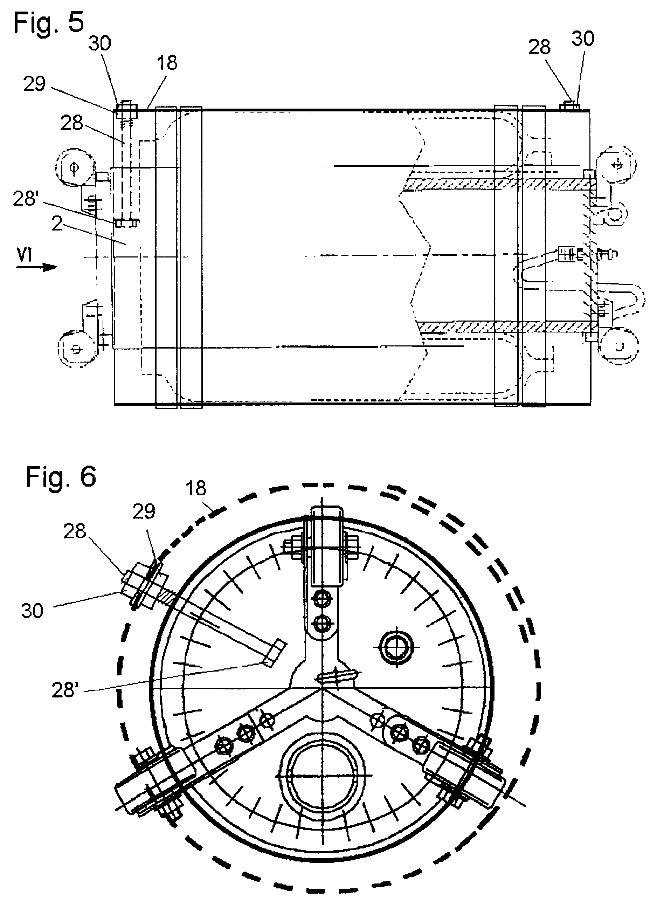

Fig. 6 zeigt in einer Seitenansicht gemäß dem Pfeil VI in Fig. 5 schematisch die Lage eines Führungsbolzens 28. Der in diesem Fall als einfache Gewindeschraube ausgebildete Führungsbolzen 28 ist an seinem radial nach außen hervorstehenden, mit Gewinde versehenen Ende über zwei auf das Gewinde aufgeschraubte Muttern 29, 30 mit der Stützhülle 18 verbunden, wobei die Muttern die Stützhülle 18 zwischen sich einklemmen. Diese Fixierung des Führungsbolzens 28 an der Stützhülle 18 erfolgt in einem Bereich, in dem die Umfangsenden der Stützhülle 18 einander nicht überlappen, so daß eine ungehinderte radiale Ausdehnung und Zusammenziehung der Stützhülle 18 möglich ist.

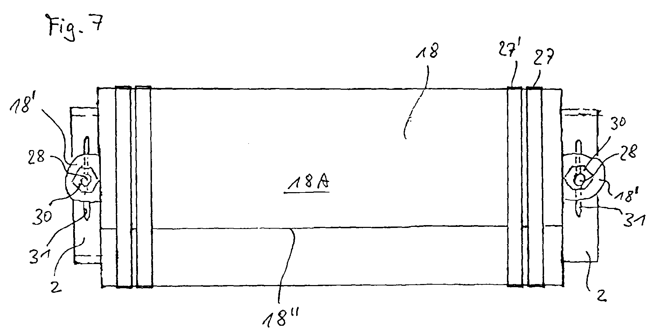

Eine Weiterbildung der Fixierung des Führungsbolzens ist in Fig. 7 gezeigt. Dort sind die Führungsbolzen 28 jeweils in einem Endabschnitt des Basiskörpers 2 vorgesehen. Diesem jeweiligen Endabschnitt zugeordnet weist die Stützhülle 18 jeweils einen axial hervorstehenden Laschenbereich 18' mit verringertem Durchmesser auf, der jeweils vom zugeordneten Führungsbolzen 28 durchdrungen wird, so daß die radial äußere Mutter 30 und das freie Ende des Führungsbolzens 28 nicht über den radial äußersten Umfang der Stützhülle 18 hinausstehen.

Zudem zeigt Fig. 7 eine Lösung, bei der die Führungsbolzen 28 im Bereich der Überlappung der Stützhülle 18 angebracht sind. Dabei ist der Gewindeabschnitt des jeweiligen Führungsbolzens 28 mittels der Muttern 29 und 30 an dem Laschenabschnitt 18' befestigt, der an der radial äußeren Lage 18A der Stützhülle 18 in der Nähe von deren äußerer freier Kante 18'' vorgesehen ist. Der Basiskörper 2 ist diesem Bereich jeweils mit einem in Umfangsrichtung verlaufenden Langloch 31 versehen ist, durch das der zugeordnete Führungsbolzen 28 hindurchtritt und in Umfangsrichtung verschiebbar gelagert ist.

Die Erfindung ist nicht auf das obige Ausführungsbeispiel beschränkt, das lediglich der allgemeinen Erläuterung des Kerngedankens der Erfindung dient. Im Rahmen des Schutzumfangs kann die erfindungsgemäße Vorrichtung vielmehr auch andere als die oben beschriebenen Ausgestaltungsformen annehmen. Die Vorrichtung kann hierbei insbesondere Merkmale aufweisen, die eine Kombination aus den jeweiligen Einzelmerkmalen der Ansprüche darstellen.

Bezugszeichen in den Ansprüchen, der Beschreibung und den Zeichnungen dienen lediglich dem besseren Verständnis der Erfindung und sollen den Schutzumfang nicht einschränken.

## Patentansprüche

1. Vorrichtung zur Reparatur von Rohren, deren Wandung bereichsweise beschädigt oder zerstört ist, mit
- einem rohrförmigen Basiskörper (2),
- mit dem Basiskörper (2) verbundenen und in Radialrichtung hervorstehenden Führungsmitteln (8), um die Vorrichtung (1) in einem Rohr (20) zu führen und an der Wandung (22) des Rohrs (20) abzustützen, und
- mit zumindest einem am Außenumfang des Basiskörpers (2) vorgesehenen Druckkörper (5), der zwischen einem im wesentlichen drucklosen und am Basiskörper (2) anliegenden Ruhezustand und einem druckbeaufschlagten Expansionszustand, in dem der Druckkörper (5) in Radialrichtung ausgedehnt ist, verfahrbar ist,
- wobei der Druckkörper (5) eine radial äußere, vom Basiskörper (2) abgewandte Außenwandung (14) aufweist,
dadurch **gekennzeichnet,**
daß der Druckkörper (5) im Bereich der Außenwandung (14) von einer im wesentlichen rohrförmigen, radial ausdehnbaren Stützhülle (18) umgeben ist, die starrer und steifer ist als die Außenwandung (14) und die sowohl im Ruhezustand als auch im Expansionszustand den Umfang des Druckkörpers (5) umgibt.

2. Vorrichtung zur Reparatur von Rohren nach Anspruch 1,
dadurch **gekennzeichnet,**
daß die Stützhülle (18) aus einem um den Umfang des Druckkörpers (5) gewickelten Blech besteht, das mittels radial einwärts federnd wirkender elastischer Elemente (27, 27') in Anlage an die Außenwandung (14) des Druckkörpers (5) vorgespannt ist, wobei die elastischen Elemente (27, 27') vorzugsweise durch Gummiringe gebildet sind.

3. Vorrichtung zur Reparatur nach einem der vorhergehenden Ansprüche,
dadurch **gekennzeichnet,**
daß sich die Stützhülle (18) in Axialrichtung über die im wesentlichen Gesamte axiale Länge des Druckkörpers (5) erstreckt, wobei die axialen Stirnkanten (18', 18'') der Stützhülle (18) bevorzugterweise zumindest bereichsweise radial einwärts gerichtet sind.

4. Vorrichtung zur Reparatur von Rohren nach einem der vorhergehenden Ansprüche,
dadurch **gekennzeichnet,**
daß die äußere, vom Basiskörper (2) abgewandte Außenwandung (14) und eine radial innere, dem Basiskörper (2) zugewandte Innenwandung (13) des Druckkörpers (5) über seitliche Faltenwandungen (15) miteinander verbunden sind.

5. Vorrichtung zur Reparatur von Rohren nach einem der vorhergehenden Ansprüche,
dadurch **gekennzeichnet,**
daß der Basiskörper (2) zylindrisch ausgebildet und/oder an seinen axialen Enden offen ist.

6. Vorrichtung zur Reparatur von Rohren nach einem der vorgehenden Ansprüche,
dadurch **gekennzeichnet,**
daß die Führungsmittel (8) jeweils an den axialen Enden des Stützkörpers (2) angeordnet sind, wobei vorzugsweise an jedem axialen Ende des Stützkörpers (2) zumindest drei über den Umfang verteilt angeordnete Führungsmittel (8) vorgesehen sind, und wobei die Führungsmittel (8) bevorzugt durch Rollen (10) gebildet sind.

7. Vorrichtung zur Reparatur von Rohren nach einem der vorhergehenden Ansprüche,
dadurch **gekennzeichnet,**
daß der Druckkörper (5) den Basiskörper (2) über dessen Umfang umgreift.

8. Vorrichtung zur Reparatur von Rohren nach einem der vorhergehenden Ansprüche,
dadurch **gekennzeichnet,**
daß die axiale Länge des Druckkörpers (5) im wesentlichen der axialen Länge des Basiskörpers (2) entspricht.

9. Vorrichtung zur Reparatur von Rohren nach einem der vorhergehenden Ansprüche,
dadurch **gekennzeichnet,**
daß die Faltenwandung (15) des Druckkörpers (5) im Ruhezustand zum Innenraum des Druckkörpers (5) hin einwärts gefaltet ist.

10. Vorrichtung zur Reparatur von Rohren nach einem der vorhergehenden Ansprüche,
dadurch **gekennzeichnet,**
daß die Innenwandung (13) und/oder die Außenwandung (14) und/oder die Faltenwandungen (15) des Druckkörpers (5) aus einem dehnbaren, hochdruckfesten Material gebildet ist bzw. sind, wobei das dehnbare hochfeste Material vorzugsweise ein Kohlefasergewebe oder ein Kohlefasergeflecht umfaßt.

11. Verfahren zur Reparatur von Rohren, deren Wandung bereichsweise beschädigt oder zerstört ist, mit einem Packer, mit den Schritten:
a) Bereitstellen eines Packers
b) Aufbringen einer Trennschicht (26) auf den Außenumfang des Packers,
c) Aufbringen eines aushärtbaren Kunstharzlaminats (25) auf die Trennschicht (26) auf deren vom Außenumfang des Packers abgewandter Seite,
d) Einführen des derart vorbereiteten Packers in ein zu reparierendes Rohr (20),
e) Verfahren der Vorrichtung (1) im Rohr (20) bis zu einem beschädigten oder zerstörten Rohrabschnitt (23), derart, daß sich der Packer in Radialrichtung neben dem beschädigten oder zerstörten Rohrabschnitt (23) befindet,
f) Einleiten eines Druckfluids in den Druckkörper (5), so daß sich der Druckkörper (5) radial ausdehnt und die mit dem Kustharzlaminat (25) versehene Trennschicht (26) radial auswärts gegen den beschädigten oder zerstörten Rohrabschnitt (23) drückt,
g) zumindest teilweises Aushärten des Kunstharzlaminats (25),
h) Zurückfahren des Druckkörpers (5) in radial einwärts gerichteter Richtung und
i) Entfernen des Packers aus dem zu reparierenden Rohr (20),
dadurch **gekennzeichnet,**
- daß die Trennschicht (26) von einer Trägerfolie (26) und/oder einem Trennmittel gebildet ist,
- daß vor dem Schritt b) eine Stützhülle (18) auf den Druckkörper, diesen umfangsmäßig umgebend, aufgebracht wird, die starrer und steifer ist, als die Außenwandung (14) und die sowohl im Ruhezustand als auch im Expansionszustand den Umfang des Druckkörpers umgibt und
- daß die Trennschicht (26) auf den Außenumfang der Stützhülle (18) aufgebracht wird.
